Europäisches Patentamt

European Patent Office

Office européen des brevets

(19)

(11) Publication number: **0 014 280**

A1

## EUROPEAN PATENT APPLICATION

(12)

(21) Application number: 79300188.4

(22) Date of filing: 07.02.79

(51) Int. Cl.³: **C 08 J 9/22**
**D 06 P 3/00**

(43) Date of publication of application:
20.08.80 Bulletin 80/17

(84) Designated Contracting States:
BE CH FR GB IT LU NL SE

(71) Applicant: **Foley Packaging Limited**
**Prince of Wales Industrial Estate Abercarn**
**Newport, Gwent, NP1 5RL(GB)**

(72) Inventor: **Roberts, John Brian**
**136, Manor Way Ty-Sign**
**Risca Gwent(GB)**

(74) Representative: **Lainé, Simon James et al,**
**Wynne-Jones, Lainé & James Morgan Arcade Chambers**
**33, St.Mary Street**
**Cardiff CF1 2AB(GB)**

(54) Improvements relating to the production of coloured expandable polystyrene.

(57) A process for dyeing expandable polystyrene beads involves making an aqueous slurry, adding the dye and heating in a closed pressure vessel. The only additive required is a surfactant which wets the surface of the beads to reduce surface tension and allow the dye to penetrate homogeneously through the beads.

EP 0 014 280 A1

"Improvements relating to the production of coloured
expandable polystyrene"

This invention relates to the production of
coloured expandable polystyrene (E.P.S).

An early proposal for dyeing pre-expanded
polystyrene beads is described in US Patent No. 3020247,
but this had shortcomings. The process was difficult to
control and resulted in surface dyeing only, whereas the aim was, and is in this invention, to attain uniform colouring throughout.

Failure to achieve this results in a mottled appearance in the final moulding of expanded beads. The problem appeared to be mainly one of time and temperature. The beads expand at more than 90°C and if immersed in an open bath for more than 30 minutes they lose too much blowing agent. Thus the beads could not be heated for long nor at very high temperatures, and so the dye could not penetrate sufficiently, even with the recommended solvents.

This process was soon superseded by one in which the dye vessel was closed and the dye was aided by a penetrant, as described in British Patent No. 1064490. The dyeing was thus carried out under pressure, and higher temperatures and longer times could be used. A preferred penetrant was pentane, which is the commonest blowing agent for E.P.S. beads. This was an improvement, but a further advance was claimed in British Patent No. 1314701, which proposed the use of a dye adjuvant rather than a bead penetrant. The dye adjuvant contained organic compounds which, it was believed, broke down the surface layer of the beads, swelling and softening the skin that impedes dye penetration.

Neither of these methods are perfect. With the first one it has been found that the penetrant does not necessarily result in homogeneous colouring, and a fault with the favoured pentane penetrant is that the contents of the vessel tend to gel together, irrespective of agitation or stirring. With the second method, it is clearly undesirable to attack the structure of the beads.

The aim of this invention is therefore to dye E.P.S. beads without the use of any additive to the aqueous slurry that will cause gelling or modification to the structure of the beads. The result should be dye and nothing but dye permeated right through all the still unexpanded beads.

According to the present invention there is provided a process for producing coloured expandable polystyrene, wherein expandable non-coloured polystyrene beads are charged to a pressure vessel with water and oil soluble and/or spirit soluble dye, the resultant slurry is heated to at least 50°C and subject to at least autogenous pressure in the closed vessel, and subsequently cooled, and the polystyrene beads, dyed and ready for expansion, are separated from the remaining contents of the vessel, characterised in that the sole initial active additive to the slurry, apart from the dye and optionally a diluent for the additive, is a surface active agent or surfactant incapable of penetrating or modifying the structure of the beads, but which acts to lower the surface tension at, or "wet", the surface of the beads to ease dye penetration.

By 'active additive' is meant a substance that positively assists dye to penetrate the beads. It would

SL/JCG                    -3-

of course be possible, although unnecessary, to add harmless passive ingredients which contributed nothing to the dye penetration.

It has been found that advantageously the surfactant should be non-ionic or a substantially balanced mixture of anionic and cationic surfactants so as to have an HLB (hydrophilic lypophilic balance) value of 8-12 and preferably 9-11. Very little is required: 1% by weight of the total mix is a more than adequate maximum and usually it will be considerably less than this. Excessive amounts are not harmful, but can give rise to foaming, which could be cured by an anti-foaming agent. Dispersion of the surfactant through the mix can be aided by diluting it with an organic liquid, for example methyl alcohol in the form of methylated spirits.

An example of a suitable surfactant is the substance sold under the trade name RENEX 20, which is a blend of polyoxyethylene esters of mixed fatty acids. Another such substance is that sold under the trade name TWEEN 20.

In one preferred form of the process, the beads are charged with the water and dye to a pressure vessel, which is left unpressurised during initial heating to a temperature less than that at which the beads will expand. The vessel is then closed for heating to higher temperatures up to 90°C. Higher temperatures than that, even under pressure, tend to make the beads expand. A convenient closure temperature is 50°C, but it could be anywhere in the range 40°C - 80°C. The maximum temperature attained and the length of dwell at that temperature depend on the dye and the depth of colour required. The dwell may be negligible or for several hours. The autogenous pressures attained depend on the time of closure and temperatures. They may be in the range 30 - 45 psig (206843 - 310264 Pa), but will usually be 35 - 40 psig (241316 - 275790 Pa). Throughout the process the slurry will be stirred or agitated.

For safety reasons, the slurry may be blanketed with an inert gas such as nitrogen, particularly during the unpressurised heat-up period and the cooling down period. A further 10 - 15 psig (68948 - 103421 Pa) may be added to the autogenous pressure when the vessel is closed; this has a steadying effect on the vortex.

The dye is preferably of the monoazo, disazo or anthraquinone type.

For a better understanding of the invention some examples of the process will now be described in more detail.

EXAMPLE 1

The following were charged to a nominally 250-gallon (1137-litre) or total 350-gallon (1591-litre) pressure vessel capable of sustaining a safe working pressure of up to 90 psig (620528 Pa) at operating temperatures of up to 130°C:

SL/JCG                    -5-

-6-

1.    140 gallons (636 litres) of untreated mains water

2.    625Kg polystyrene beads containing a pneumatogen, i.e. a blowing agent which eventually causes their expansion

3.    A slurry of 600g 'WAXOLINE YELLOW T' dyestuff and 600 g 'CERES ORANGE G' dyestuff in about 1 gallon (4.5 litres) untreated water containing about 200ml of RENEX 20 as a 'wetting' agent.

The contents were heated while being stirred to $50^{c}C$ in the pressure vessel, which was relieved to atmosphere whilst a safety blanket of inert gas (ultra-pure nitrogen at about 3-4 psig (20684 - 27579 Pa) was maintained over those contents by a steady flow from a standard gas cylinder. The vent valve was closed at $50^{o}C$ and the heating continued until the contents of the vessel reached a temperature of $80^{o}C$. The contents of the vessel were maintained at this temperature for a period of $2\frac{1}{2}$ hours and then cooled, using a surrounding water jacket, to about $40^{o}C$. Total time for heat-up/cool-down was about $1\frac{1}{2}$ hours, making it a 4 hour process. The contents of the vessel were then discharged, and the liquid was drained from the beads.

When dried and expanded the beads were uniformly medium shaded yellow/orange and the article moulded from them likewise.

SL/JCG                    -6-

## EXAMPLE 2

EXAMPLE 1 was repeated with the following differences:

3. A slurry of 1Kg 'WAXOLINE BLUE AP' dyestuff in about 1 gallon (4.5 litres) untreated water containing about 200ml of TWEEN 20 as a 'wetting' agent.

After the vent valve was closed at $50^{\circ}$C, the heating continued until the contents of the vessel reached a temperature of $90^{\circ}$C. The contents of the vessel were maintained at this temperature for a period of 3 hours and then cooled, using the surrounding water jacket, to about $40^{\circ}$C. Total time for heat-up/cool-down was about 2 hours, making it a 5 hour process.

When dried and expanded the beads were uniformly medium shaded blue and the article moulded from them likewise.

-1-

## CLAIMS

1. A process for producing coloured expandable polystyrene, wherein expandable non-coloured polystyrene beads are charged to a pressure vessel with water and oil soluble and/or spirit soluble dye, the resultant slurry is heated to at least 50°C and subject to at least autogenous pressure in the closed vessel, and subsequently cooled, and the polystyrene beads, dyed and ready for expansion are separated from the remaining contents of the vessel, characterised in that the sole initial active additive to the slurry, apart from the dye and optionally a diluent for the additive, is a surface active agent or surfactant incapable of penetrating or modifying the structure of the beads, but which acts to lower the surface tension at, or "wet", the surface of the beads to cause dye penetration.

2. A process as claimed in claim 1, wherein the surfactant is non-ionic, or is a mixture of anionic and cationic surfactants, and has an HLB value of from 8 to 12.

3. A process as claimed in claim 1 or 2, wherein the proportion of surfactant is less than 1% by weight of the total mix.

4. A process as claimed in claim 1, 2 or 3, wherein the diluent includes an organic liquid.

5. A process as claimed in claim 4, wherein the diluent includes an alcohol.

SL/JCG                              -1-

-2-

6. A process as claimed in any preceding claim, wherein the surfactant is a blend of polyoxyethylene esters of mixed fatty acids.

7. A process as claimed in any preceding claim, wherein the pressure vessel is left unpressurised during initial heating to a temperature in the range $40^{\circ} - 80^{\circ}C$ and is then closed for heating to higher temperatures.

8. A process as claimed in any preceding claim, wherein the slurry is stirred or agitated.

9. A process as claimed in any preceding claim, wherein a safety blanket of inert gas is provided for the slurry.

10. A process as claimed in any preceding claim, wherein the dye is of the monoazo, disazo or anthraquinone type.

SL/JCG      -2-

0014280

European Patent
Office

**EUROPEAN SEARCH REPORT**

Application number

EP 79 30 0188

## DOCUMENTS CONSIDERED TO BE RELEVANT

| Category | Citation of document with indication, where appropriate, of relevant passages | Relevant to claim |
|---|---|---|
| | CHEMICAL ABSTRACTS, vol. 80, no. 22, June 3, 1974, 121872w. Columbus, Ohio, USA <br> & JP - A - 73 24502 (KOKUSAI ELECTRIC CO.LTD.) 21-07-1973. <br> * Abstract * <br> -- | 1 |
| A | US - A - 3 850 860 (S.B. SMITH) <br> * Claim 1 * <br> -- | 1 |
| | GB - A - 873 443 (KOPPERS) <br> * Claims 1-5,7; page 3, lines 77-127 * <br> -- | 1,2 |
| D | GB - A - 1 064 490 (KOPPERS) <br> * Claims ; page 2, lines 90-91; figure 1 * <br> -- | 1,2, 8,9 |
| D | GB - A - 1 314 701 (FOSTER GRANT) <br> * Claims; page 3, lines 10-35 * <br> -- | 1 |
| L | DE - A - 2 735 029 (FOLEY PACKAGING) February 22, 1979 <br> * Claims 1-7,10; page 4, lines 1-10 * <br> -- | 1-3, 6-10 |
| | US - A - 3 480 570 (B. ROBERTS et al. ) <br> * Claim 1; column 2, lines 12-58 * <br> ---- | 1-5 |

The present search report has been drawn up for all claims

CLASSIFICATION OF THE APPLICATION (Int. Cl.

C 08 J 9/22
D 06 P 3/00

TECHNICAL FIELDS SEARCHED (Int.Cl. 3)

C 08 J 9/22
D 06 P 3/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| Place of search | Date of completion of the search | Examiner |
|---|---|---|
| The Hague | 25-09-1979 | HALLEMEESCH |

EPO Form 1503.1 06.78